# EUROPÄISCHE PATENTSCHRIFT

(11) **EP 2 700 219 B1**
(45) Veröffentlichungstag und Bekanntmachung des Hinweises auf die Patenterteilung: **30.11.2016**
(21) Anmeldenummer: 12717190.8
(22) Anmeldetag: 18.04.2012
(51) Int. Cl.: H04N 1/04, H04N 1/19, H04N 1/193, H04N 1/387

(54) **GROSSFORMATIGES SCANNER-SYSTEM**
LARGE FORMAT SCANNING SYSTEM
SYSTÈME DE SCANNER GRAND FORMAT

(30) Priorität: 21.04.2011 DE 102011018381
(43) Veröffentlichungstag der Anmeldung: 26.02.2014
(73) Patentinhaber: Roth + Weber GmbH, 57520 Niederdreisbach (DE)
(72) Erfinder: ROTH, Johannes, 57518 Betzdorf (DE); ERMERT, Gerd, 57586 Weitefeld (DE)
(74) Vertreter: Grosse, Wolf-Dietrich Rüdiger
(86) Internationale Anmeldenummer: PCT/EP2012/001670
(87) Internationale Veröffentlichungsnummer: WO 2012/143124

(56) Entgegenhaltungen:
- DE-A1- 3 924 757
- US-A1- 2008 297 856

## Beschreibung

Die Erfindung betrifft ein großformatiges Scanner-System mit wenigstens zwei kaskadenförmig angeordneten Bilderfassungselementen, einer davor angeordneten Glasscheibe, sowie mit den wenigstens zwei kaskadenförmig angeordneten Bilderfassungselementen gegenüber angeordneten Reflektorwalzen, die mittels an den Seiten der Reflektorwalzen angeordneter federnder Elemente gegen die Glasscheibe und/oder eine Scan-Vorlage gedrückt werden.

Bei großformatigen Scanner-Systemen sind Vorrichtungen mit durchgehenden Bilderfassungselementen, beispielsweise Contact Image Sensoren (CIS), bekannt, welche die komplette Scan-Breite abdecken. Die Scan-Vorlage wird beispielsweise über eine durchgehende, angetriebene Reflektorwalze an die Glasscheibe des Bilderfassungselementes angedrückt. Dies ist notwendig um ein Scan-Bild mit der erforderlichen Schärfe zu erzeugen.

Die Glasscheibe verschleißt durch den Kontakt mit dem Original oder der Reflektorwalze, die je nach Größe der Scan-Vorlage bei nur teilweiser Überdeckung der Reflektorwalze durch die Scan-Vorlage die Glasscheibe berührt. Eine Folge sind Fehler im Scan-Bild, die einen Austausch der Glasscheibe erfordern.

Bei derartigen angetriebenen Reflektorwalzen ist es z.B. durch die JP 9 027 889 A bekannt, den Verschleiß der Glasscheibe durch einen definierten Spalt zwischen Reflektorwalze und Glasscheibe zu reduzieren. Hierzu wird ein definierter Abstand zur Glasscheibe durch außerhalb der Scan-Breite angebrachte Distanzscheiben hergestellt.

Derartige großformatige Scanner-Systeme weisen jedoch folgende Nachteile auf: Sie sind mit hohen Kosten aufgrund durchgehender CIS verbunden und die angetriebene durchgehende Reflektorwalze ist ebenfalls sehr kostenintensiv.

Darüber hinaus sind z.B. durch die US 2008/0297865 A1 großformatige Scanner-System Vorrichtungen mit kaskadenförmig angeordneten Bilderfassungselementen, beispielsweise CIS, bekannt. Die verwendeten CIS werden üblicherweise in hohen Stückzahlen für kleinformatige Scanner-Systeme im Officebereich verwendet und können somit kostengünstig hergestellt werden. Beim kaskadenförmigen Einsatz in großformatigen Scanner-Systemen ergeben sich gegenüber einteiligen langen CIS erhebliche Kostenvorteile. Den in Stufen angeordneten Bilderfassungselementen sind nach der US 2008/0297865 A1 eine angetriebene und eine nicht angetriebene, sich über die gesamte Breite der Glasplatte erstreckende, ebenfalls kostenintensive Umlenkrolle zugeordnet, wobei um die Umlenkrollen ein Reflektorband gespannt ist.

Die JP 2006 313 995 A offenbart mehrere nebeneinander angeordnete Bilderfassungselemente in zwei Stufen. Diesen zwei Stufen stehen ebenfalls über deren gesamte Breite zwei an ihren Enden gelagerte kostspielige angetriebene Reflektorwalzen bzw. zwei ebenfalls kostspielige Wellen, auf denen unterbrochene Reflektorwalzen angeordnet sind gegenüber.

Die DE 39 24 757 A1 offenbart lediglich ein Bilderfassungselement, dem eine Reflektorwalze zugeordnet ist, die sich außerhalb der wirksamen Breite des Bilderfassungselements auf der Glasscheibe so abstützt, dass die Vorlagen nur zwischen den Abstützungen transportiert werden können. Eine kostengünstige kaskadenförmige Anordnung von Bilderfassungselementen und diesen jeweils zugeordnete Reflektorwalzen ist wegen der, keinen Transport der Vorlagen erlaubenden Abstützung der Reflektorwalzen nicht möglich.

Die kaskadenförmige Anordnung der Bilderfassungselemente, auch als sogenannte Zickzack-Ausrichtung bekannt, ist notwendig, um ein durchgehendes Scan-Bild über die komplette Scan-Breite zu erzielen. Der Versatz, bzw. die Überlappung der einzelnen CIS in x- und γ-Richtung wird über geeignete Softwareverfahren, beispielsweise sogenannte Stitching-Verfahren, korrigiert, um ein durchgehendes Scan-Bild zu erhalten.

Bei derartigen Verfahren ist es grundsätzlich notwendig, die Reflektorwalzen beispielsweise über Federandruck an die Glasscheibe anzudrücken, wie dies noch nachfolgend anhand der Figuren beschrieben wird. Ursache hierfür ist, dass Bilderfassungselemente und auch CIS normalerweise über eine geringe Tiefenschärfe verfügen. Deshalb wird die Scan-Vorlage über die Reflektorwalzen an die Glasscheibe gedrückt, um eine Bilderfassung im Fokuspunkt bzw. Fokusbereich des Bilderfassungselementes sicherzustellen. Nur so kann ein scharfes Scan-Bild, insbesondere bei geknickten, welligen oder unebenen Scan-Vorlagen erreicht werden.

Das Scan-Verfahren mit einem derartigen großformatigen Scanner-System hat folgende Nachteile:
Es entsteht ein erhöhter Verschleiß der Glasscheiben durch die Reibung der Scan-Vorlage auf den Glasscheiben sowie durch die Reflektorwalze, wenn die Scan-Vorlage nur teilweise zwischen Reflektorwalze und Glasscheibe liegt und die Reflektorwalze die Glasscheibe berührt.

Es treten Stitching-Fehler durch nicht angetriebene Reflektorwalzen auf. Die Reflektorwalzen werden durch die Scan-Vorlage angetrieben. Die notwendige Beschleunigung durch die Scan-Vorlage ist nicht regelmäßig und lässt sich durch bekannte Softwareverfahren, beispielsweise Stitching-Verfahren, nicht ausgleichen.

Die Erfindung geht von der Aufgabe aus, bei großformatigen Scanner-Systemen den die Scannqualität vermindernden Verschleiß der Glasscheiben durch die Scan-Vorlage und/oder bei nur teilweise zwischen Reflektorwalze und Glasscheibe liegender Scan-Vorlage durch die Reflektorwalze zu vermindern.

Die Aufgabe wird erfindungsgemäß für eine Vorrichtung der eingangs genannten Art durch die im Patentanspruch 1 angegebenen Merkmale gelöst. Vorteilhafte Ausbildungen sind in den abhängigen Patentansprüchen angegeben.

Die Aufgabe wird erfindungsgemäß dadurch gelöst, dass jedem Bilderfassungselement eine separat gelagerte Reflektorwalze zugeordnet ist, dass jede Reflektorwalze die wirksame Breite des ihr gegenüberstehenden Bilderfassungselementes beidseitig um ein Maß übersteigt, welches im Wesentlichen durch die Breite eines Reflektorwalzenbereiches, der gegenüber dem das Bilderfassungselement abdeckenden Mittenbereich der Reflektorwalze einen größeren Durchmesser aufweist sowie der jeweiligen Breite eines Reflektorwalzenlagers gebildet wird, und dass ein definierter Spalt zwischen der Reflektorwalze im Bereich des kleineren Durchmessers und der Glasscheibe zur Aufnahme der Scan-Vorlage eingestellt ist.

D.h. die Reflektorwalzen sind an ihren Seitenbereichen derart ausgebildet, dass sie nur außerhalb des Lesebereichs der Bilderfassungselemente für die Scan-Vorlage die Glasscheibe berühren und dass die Scan-Vorlage im Mittenbereich der Reflektorwalzen an der Glasscheibe anliegt. Das kann z.B. dadurch bewerkstelligt werden, dass die Reflektorwalzen in deren Endbereichen größere Durchmesser aufweisen oder in diesen Bereichen Hülsen aufgesetzt sind oder dass z.B. Distanzscheiben Einsatz finden. Durch diese Maßnahme kommt es nur außerhalb des Lesebereichs der Bilderfassungselemente durch die zwischen Reflektorwalze dickeren Durchmessers und Glasscheibe transportierte Scan-Vorlage, bzw. durch die Reflektorwalze dickeren Durchmessers selbst zu einem möglichen, für das Lesen jedoch unschädlichen Verschleiß der Glasscheibe. Der Ersatz der die gesamte Glasscheibenbreite überdeckenden teuren Reflektorwalze durch mehrere kleine Reflektorwalzen macht das großformatige Scanner-System kostengünstig.

Von Vorteil ist, dass sich im jeweiligen Lesebereich ein definierter Spalt zwischen der Reflektorwalze und Glasscheibe bilden lässt, der so dimensioniert ist, dass einerseits eine optimale Anlage der Scan-Vorlage an der Glasscheibe sichergestellt ist und andererseits der Scan-Vorlage genügend Raum gegeben wird.

Es hat sich als vorteilhaft erwiesen, wenn die Dicke des Spalts kleiner gleich der Dicke der Scan-Vorlage ist.

Aber auch eine Dicke des Spaltes größer gleich der Dicke der Scan-Vorlage ist möglich. Dadurch würde ein Verschleiß der Glasscheibe praktisch komplett unterbunden. Der Spalt muss jedoch so eingestellt werden, dass die Scan-Vorlage im Fokusbereich der Bilderfassungselemente liegt, so dass die Scannqualität nicht leidet.

Erfindungsgemäß können mehrere kleinformatige Bilderfassungselemente kaskaden- oder zickzackförmig nebeneinander angeordnet sein.

Grundsätzlich können auch teuere, angetriebene Reflektorwalzen Anwendung finden, in vorteilhafter Weise können jedoch mehrere nicht angetriebene, kleinformatige, kaskadenförmig angeordnete Reflektorwalzen nebeneinander angeordnet sein. Diese sind den einzelnen Bilderfassungselementen zugeordnet.

Bemerkenswert ist, dass die Reflektorwalzen ein sehr leichtgängiges Lager und einen gewichtsoptimierten Aufbau aufweist, wobei die Masse der Reflektorwalze ≤ 0,285 g/mm ist. Durch diesen Aufbau wird erreicht, dass die nicht angetriebene leichtgängige Reflektorwalze beim Eintritt der Scan-Vorlage in den Spalt zwischen Glasscheibe und Reflektorwalze, regelmäßig ohne dass es zu einem Stau und damit zu Stitching-Fehlern kommt, auf eine der Scan- Vorlagengeschwindigkeit entsprechende Umfangsgeschwindigkeit beschleunigt wird.

Die Erfindung ist nachfolgend anhand von in der Zeichnung dargestellten Ausführungsbeispielen näher erläutert. Es zeigen:
- Fig. 1: ein bekanntes Scanner-System,
- Fig.2: ein Scanner-System mit erfindungsgemäß ausgebildeter Reflektorwalze, und
- Fig. 3: ein Scanner-System mit kaskadenförmig angeordneten Bilderfassungselementen.

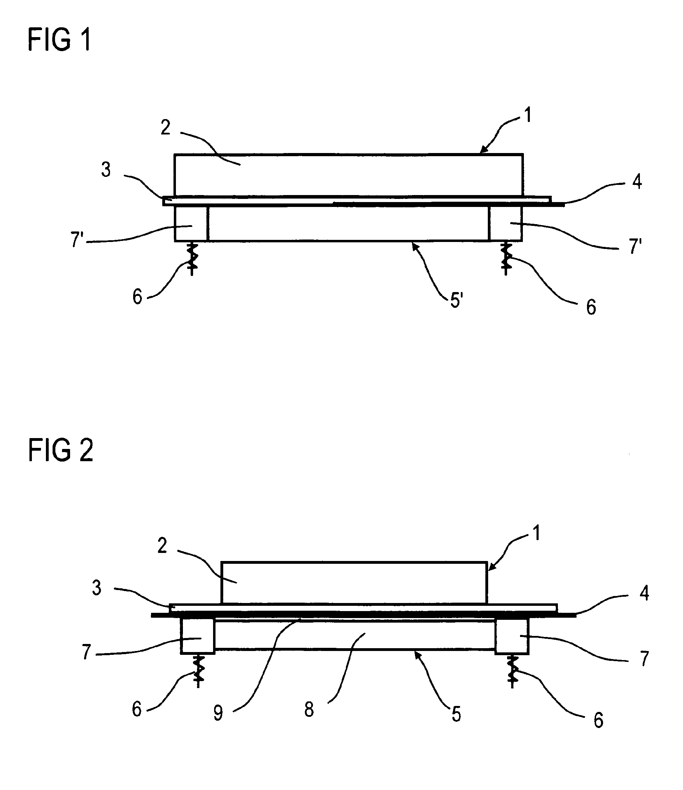

In der Figur 1 ist ein bekanntes Scanner-System 1 mit einem Bilderfassungselement 2 dargestellt, vor dem eine Glasscheibe 3 angeordnet ist. Gegen diese Glasscheibe 3 wird eine Scan-Vorlage 4 durch eine Reflektorwalze 5' mittels Federn 6 gedrückt. Die Federn 6 greifen dabei kraftmäßig an Seitenbereichen 7' der Reflektorwalze 5' an und drücken damit die Reflektorwalze 5' auf die Scan-Vorlage 4. Liegt die Scan-Vorlage 4, wie dargestellt, nur teilweise zwischen Reflektorwalze 5' und Glasscheibe 3, so dass sich eine teilweise Überdeckung der Reflektorwalze, 5' durch die Scan-Vorlage 4 ergibt, dann reibt die Reflektorwalze 5' auf der Glasscheibe 3, so dass der Verschleiß hoch ist. Anderenfalls, wenn die Scan-Vorlage 4 vollständig zwischen Reflektorwalze 5' und Glasscheibe 3 liegt und die gesamte Breite der Reflektorwalze 5' ausfüllt, nutz die Scan-Vorlage 4 die Glasscheibe 3 ab.

Die Figur 2 zeigt ein erfindungsgemäßes Scanner-System 1 mit einer Reflektorwalze 5, bei der die Seitenbereiche 7 mit seitlichen Anschlägen versehen sind, die einen größeren Durchmesser aufweisen als der Mittenbereich 8 der Reflektorwalze 5. Die Scan-Vorlage wird im Wesentlichen lediglich in den Bereichen der Reflektorwalze 5 mit größerem Durchmesser, der zudem außerhalb des Lesebereichs des Bilderfassungselementes 2 liegt, an die Glasscheibe 3 gedrückt. Dadurch bildet sich zwischen der Reflektorwalze 5 und der Glasscheibe 3 im Mittenbereich 8 ein Spalt 9, der eine definierte Größe aufweist, die eine optimale Anlage der Scan-Vorlage 4 an der Glasscheibe 3 sicherstellt. Zum Anderen sorgt der Spalt 9 im Mittenbereich 8 der Reflektorwalze 5 für genügend Raum für die Scan-Vorlage 4.

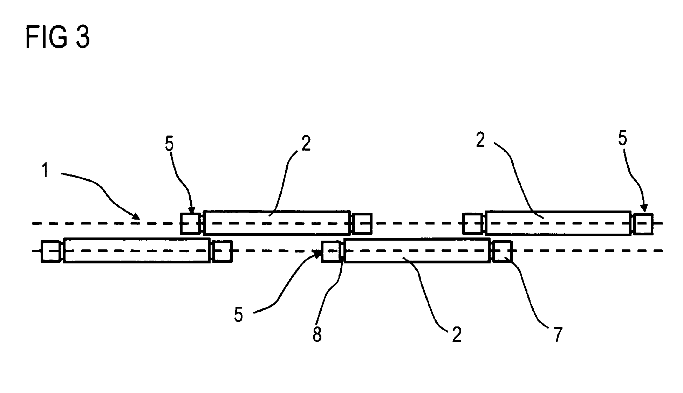

In der Figur 3 ist ein Scanner-System 1 mit vier zum Scannen einer großformatigen Scan-Vorlage kaskaden- oder zickzackförmig angeordneten Bilderfassungselementen 2 in Aufsicht dargestellt. Jedem Bilderfassungselement 2 ist eine nicht angetriebene Reflektorwalze 5 mit im Mittenbereich 8 gegenüber den Seitenbereichen 7 reduziertem Durchmesser zugeordnet.

Beim vorgesehenen erfindungsgemäßen Aufbau werden also aus Kostengründen von kleinformatigen Scanner-Systemen bekannte CIS als Bilderfassungselemente 2 kaskadenförmig angeordnet. Ebenfalls aus Kostengründen werden nicht angetriebene, kaskadenförmig angeordnete Reflektorwalzen eingesetzt.

Zur Reduzierung des Verschleißes der Glasscheibe 3 durch die Scan-Vorlage 4 liegt beim vorgesehenen Scan-Verfahren die Reflektorwalze 5 nur außerhalb des Lesebereichs der Bilderfassungselemente 2 an, so dass der durch den Andruck der Scan-Vorlage 4 an die Glasscheibe 3 bei bekannten Scan-Verfahren verursachte erhöhte Verschleiß der Glasscheibe 3 verringert wird.

Es wird somit ein definierter Spalt 9 zwischen der Reflektorwalze 5 und Glasscheibe 3 sichergestellt. Der Spalt 9 ist derart dimensioniert, dass zum einen eine optimale Anlage der Scan-Vorlage 4 an der Glasscheibe 3 sichergestellt ist und zum anderen der Scan-Vorlage 4 genügend Raum gegeben wird.

Hierdurch wir die Andruckkraft zwischen Scan-Vorlage 4 und Glasscheibe 3 und damit der Verschleiß an der Glasscheibe 3 im Lesebereich der Bilderfassungselemente 2 reduziert bzw. ausgeschlossen.

Dadurch erfolgt zudem eine erhebliche Reduzierung des Verschleißes der Glasscheibe 3 durch die Reflektorwalze 5 bei teilweiser Überdeckung der Reflektorwalze 5 durch die Scan-Vorlage 4.

Bei bekannten Scan-Verfahren berührt die beispielsweise über Federn 6 angedrückte Reflektorwalze 5' bei teilweiser Überdeckung durch die Scan-Vorlage zwangsläufig die Glasscheibe 3 im Lesebereich des Bilderfassungselements 2. Durch die Drehbewegung der Reflektorwalze 5' reibt diese während des Scan-Vorgangs an der Glasscheibe 3 in diesem Lesebereich, so dass ein erhöhter Verschleiß die Folge ist.

Beim erfindungsgemäßen Scan-Verfahren berührt die Reflektorwalze 5 auch bei nur teilweiser Überdeckung durch die Scan-Vorlage 4 die Glasscheibe 3 nur außerhalb des Lesebereichs der Bilderfassungselemente 2, so dass Beschädigungen der Glasscheibe 3 durch die Reflektorwalze 5 wie bei bekannten Scan-Verfahren ausgeschlossen werden können. Dies hat eine erhebliche Erhöhung der Lebensdauer der Glasscheibe 3 und somit eine Kostenreduzierung zur Folge.

Regelmäßig kommt es bei bekannten Scan-Verfahren mit nicht angetriebenen Reflektorwalzen 5' zu Bildfehlern, sogenannten Stitching-Fehlern, die insbesondere im Bereich der Übergänge zwischen den kaskadenförmig angeordneten Bilderfassungselementen 2, vorzugsweise im Anfangsbereich der Scan-Vorlage 4 auftreten.

Die Bildfehler werden ursächlich dadurch hervorgerufen, dass die Reflektorwalzen 5' über keinen aktiven Antrieb verfügen, sondern durch die Scan-Vorlage 4 selbst angetrieben werden müssen.

Durch die Massenträgheit der Reflektorwalzen 5' kommt es zu nicht kalkulierbaren nicht linearen Geschwindigkeitsänderungen der Scan-Vorlage 4, die durch bekannte Softwareverfahren - Stitching-Verfahren - nicht zuverlässig kompensiert werden können.

Stellt sich mit zunehmender Länge der Scan-Vorlage 4 über den Transport der Scan-Vorlage 4 eine gleichbleibende Geschwindigkeit zwischen Scan-Vorlage 4 und Bilderfassungselement 2 ein, lassen sich derartige Bildfehler (Stitching-Fehler) durch bekannte Softwareverfahren (Stitching-Verfahren) zuverlässig vermeiden.

Die Reflektorwalzen 5 zeichnen sich durch einen gewichtsoptimierten Aufbau und einen sehr leichtgängigen Lauf aus. Die Reflektorwalze hat dabei ein Gewicht≤ 0,285 g/mm. Hinzu kommt, dass die Reflektorwalzen 5 nicht wie bei bekannten Verfahren über die ganze Scan-Breite der einzelnen Bilderfassungselemente 2 an der Glasscheibe 3 anliegen, sondern nur an deren Enden. Dies führt zu einer erhebliche Reduzierung der Reibung. Durch diesen optimierten Aufbau wird die Scan-Vorlage 4 annähernd gleichförmig durch den Lesebereich der Bilderfassungselemente 2 geführt und der sich ergebende Stitching-Fehler minimiert. Verbleibende Ungenauigkeiten können dann zuverlässig durch bekannte Softwareverfahren (Stitching-Verfahren) kompensiert werden.

### Bezugszeichenliste

- 1: Scanner-System
- 2: Bilderfassungselement
- 3: Glasscheibe
- 4: Scan-Vorlage
- 5: Reflektorwalze
- 6: Federn
- 7: Seitenbereiche
- 8: Mittenbereich
- 9: Spalt

## Patentansprüche

1. Großformatiges Scanner-System (1) mit wenigstens zwei kaskadenförmig angeordneten Bilderfassungselementen (2), einer davor angeordneten Scan-Vorlagenanlage, vorzugsweise eine Glasscheibe (3), sowie mit den wenigstens zwei kaskadenförmig angeordneten Bilderfassungselementen (2) gegenüber angeordneten Reflektorwalzen (5), die mittels an den Seiten der Reflektorwalzen (5) angeordneter federnder Elemente (6) gegen die Glasscheibe (3) und/oder eine Scan-Vorlage (4) gedrückt werden,
**dadurch gekennzeichnet,**
**dass** jedem Bilderfassungselement eine separat gelagerte Reflektorwalze (5) zugeordnet ist, dass jede Reflektorwalze (5) die wirksame Breite des ihr gegenüberstehenden Bilderfassungselementes (2) beidseitig um ein Maß übersteigt, welches im Wesentlichen durch die Breite eines Reflektorwalzenbereiches, der gegenüber dem das Bilderfassungselement (2) abdeckenden Mittenbereich (8) der Reflektorwalze (5) einen größeren Durchmesser aufweist sowie der jeweiligen Breiten eines Reflektorwalzenlagers gebildet wird, und dass ein definierter Spalt (9) zwischen der Reflektorwalze (5) im Bereich des kleineren Durchmessers und der Glasscheibe (3) zur Aufnahme der Scan-Vorlage (4) eingestellt ist.

2. Großformatiges Scanner-System (1) nach Anspruch 1,
**dadurch gekennzeichnet,**
**dass** der Spalt (9) derart in Abhängigkeit von der Scan-Vorlagendicke dimensioniert ist, dass eine optimale Anlage bzw. ein optimaler Andruck der Scan-Vorlage (4) an der Glasscheibe (3) erreicht wird.

3. Großformatiges Scanner-System (1) nach Anspruch 1 oder 2,
**dadurch gekennzeichnet,**
**dass** die Dicke des Spalts (9) kleiner gleich der Dicke der Scan-Vorlage (4) ist.

4. Großformatiges Scanner-System (1) nach Anspruch 1 oder 2,
**dadurch gekennzeichnet,**
**dass** die Dicke des Spalts (9) größer gleich der Dicke der Scan-Vorlage (4) ist.

5. Großformatiges Scanner-System (1) nach einem der Ansprüche 1 bis 4,
**dadurch gekennzeichnet,**
**dass** mehrere kleinformatige Bilderfassungselemente (2) kaskaden- oder zickzackförmig nebeneinander angeordnet sind.

6. Großformatiges Scanner-System (1) nach einem der Ansprüche 1 bis 5,
**dadurch gekennzeichnet,**
**dass** mehrere nicht angetriebene, kleinformatige, kaskadenförmig angeordnete Reflektorwalzen nebeneinander angeordnet sind.

7. Großformatiges Scanner-System (1) nach einem der Ansprüche 1 bis 5,
**dadurch gekennzeichnet,**
**dass** die Reflektorwalzen (5) ein sehr leichtgängiges Lager und einen gewichtsoptimierten Aufbau aufweist, wobei die Masse der Reflektorwalze (5) ≤ 0,285 g/mm beträgt.

## Claims

1. A large-size scanner system (1) with at least two image capturing elements (2) arranged in a cascade-like manner, a contact surface arranged in front of the scan template, preferably a glass pane (3), as well as at least two reflector rollers (5) arranged opposite the image capturing elements (2) arranged in a cascade-like manner, which rollers are pressed against the glass pane (3) and/or the scan template (4) by means of spring-loaded elements (6) arranged on the sides of the reflector rollers (5),
**characterised in that**
a separately mounted reflector roller (5) is allocated to each image capturing element, **in that** each reflector roller (5) exceeds the width of the oppositely arranged image capturing element (2) on both sides by an amount, which essentially is formed by the width of a reflector roller area comprising a larger diameter compared to the centre area (8) of the reflector roller (5) covering the image capturing element (2) as well as the respective widths of a reflector roller bearing, and **in that** a defined gap (9) is set between the reflector roller (5) in the area of the smaller diameter and the glass pane (3) for receiving the scan template (4).

2. The large-size scanner system (1) according to claim 1,
**characterised in that**
the gap (9) is dimensioned in dependence of the thickness of the scan template such that an optimal contact / an optimal contact pressure of the scan template (4) is achieved at the glass pane (3).

3. The large-size scanner system (1) according to claim 1 or 2,
**characterised in that**
the thickness of the gap (9) is smaller or equal to the thickness of the scan template (4).

4. The large-size scanner system (1) according to claim 1 or 2,
**characterised in that**
the thickness of the gap (9) is larger or equal to the thickness of the scan template (4).

5. The large-size scanner system (1) according to one of claims 1 to 4,
**characterised in that**
a number of small-size image capturing elements (2) are arranged adjacently to each other in a cascade- or zigzag-shaped manner.

6. The large-size scanner system (1) according to one of claims 1 to 5,
**characterised in that**
a number of non-driven, small-size, reflector rollers arranged in a cascade-like manner are arranged adjacently to each other.

7. The large-size scanner system (1) according to one of claims 1 to 5,
**characterised in that**
the reflector rollers (5) comprise a smooth-running bearing and a weight-optimised structure, wherein the mass of the reflector roller (5) is ≤ 0.285 g/mm.

## Revendications

1. Système de scanner grand format (1) avec au moins deux éléments de capture d'image (2) disposés en forme de cascade, un support d'appui d'original de scannage, de préférence une plaque de verre (3), ainsi qu'avec des cylindres réflecteurs (5) disposés en vis-à-vis des au moins deux éléments de capture d'image (2) disposés en forme de cascade, lesquels cylindres sont pressés contre la plaque de verre (3) et /ou un original de scannage (4) au moyen d'éléments élastiques (6) disposés sur les côtés des cylindres réflecteurs (5),
**caractérisé en ce que**
l'on associe à chaque élément de capture d'image un cylindre réflecteur (5) monté séparément, **en ce que** chaque cylindre réflecteur (5) dépasse des deux côtés la largeur efficace de l'élément de capture d'image (2) situé en vis-à-vis de lui de l'ordre d'une mesure, laquelle est obtenue sensiblement grâce à la largeur d'une zone de cylindre réflecteur qui présente un diamètre plus grand par rapport à la zone médiane (8) du cylindre réflecteur (5) recouvrant l'élément de capture d'image (2) ainsi qu'aux largeurs respectives d'un roulement de cylindre réflecteur, et **en ce qu'**un écartement (9) défini est réglé entre le cylindre réflecteur (5) dans la zone du diamètre plus petit et la plaque de verre (3) pour la réception de l'original de scannage (4).

2. Système de scanner grand format (1) selon la revendication 1,
**caractérisé en ce que**
l'écartement (9) est dimensionné en fonction de l'épaisseur de l'original de scannage d'une manière telle, que l'on obtient un appui optimal, ou une application de pression optimale de l'original de scannage (4) contre la plaque de verre (3).

3. Système de scanner grand format (1) selon la revendication 1 ou 2,
**caractérisé en ce que**
l'épaisseur de l'écartement (9) est inférieure ou égale à l'épaisseur de l'original de scannage (4).

4. Système de scanner grand format (1) selon la revendication 1 ou 2,
**caractérisé en ce que**
l'épaisseur de l'écartement (9) est supérieure ou égale à l'épaisseur de l'original de scannage (4).

5. Système de scanner grand format (1) selon l'une des revendications 1 à 4,
**caractérisé en ce que**
plusieurs éléments de capture d'image de petit format (2) sont disposés en forme de cascade ou de zigzag les uns à côté des autres.

6. Système de scanner grand format (1) selon l'une des revendications 1 à 5,
**caractérisé en ce que**
plusieurs cylindres réflecteurs de petit format, non entraînés, disposés en forme de cascade, sont disposés les uns à côté des autres.

7. Système de scanner grand format (1) selon l'une des revendications 1 à 5,
**caractérisé en ce que**
les cylindres réflecteurs (5) présentent un roulement très manoeuvrable et une structure à poids optimisé, dans lequel la masse du cylindre réflecteur (5) est ≤ 0,285g/mm.
